# EUROPEAN PATENT APPLICATION

(11) **EP 3 588 652 A1**
(43) Date of publication of application: **01.01.2020**
(21) Application number: 19181140.5
(22) Date of filing: 19.06.2019
(51) Int. Cl.: H01M 8/2432, H01M 8/2483, H01M 8/0612, H01M 8/04302, H01M 8/04014, H01M 8/04223

(54) **FUEL CELL MODULE AND METHOD OF OPERATING THE SAME**

(30) Priority: 21.06.2018 JP 2018117517
(71) Applicant: Honda Motor Co., Ltd., Tokyo 107-8556 (JP)
(72) Inventor: TODA, Shigeru, Wako-shi, Saitama 351-0193 (JP); YAMADA, Takayuki, Wako-shi, Saitama 351-0193 (JP)
(74) Representative: Weickmann & Weickmann PartmbB

(57) **Abstract**

A fuel cell module (10) is equipped with a fuel cell stack (12) in which a plurality of flat plate-shaped fuel cells (33) are stacked, each of the fuel cells including an anode (25) to which a fuel gas is supplied via a fuel gas flow field (32), and a cathode (23) to which an oxygen-containing gas is supplied via an oxygen-containing gas flow field (30). Further, in the fuel cell stack (12), a reforming catalyst (14a) (reformer (14)), which reforms a raw fuel primarily containing hydrocarbon and produces the fuel gas, is provided in a fuel gas inlet passage (32a), which penetrates in a thickness direction through the plurality of fuel cells (33) and is in communication with the fuel gas flow fields (32).

## Description

### BACKGROUND OF THE INVENTION

### Field of the Invention:

The present invention relates to a fuel cell module in which a plurality of fuel cells are stacked which generate electricity by an electrochemical reaction that takes place between a fuel gas and an oxygen-containing gas. The present invention further relates to a method of operating such a fuel cell stack.

### Description of the Related Art:

A solid oxide fuel cell (SOFC) employs, for example, an oxide ion conductor such as stabilized zirconia as a solid electrolyte. An anode and a cathode are joined to both sides of the solid electrolyte. Such an electrolyte electrode assembly (hereinafter also referred to as an MEA) is sandwiched between separators (bipolar plates). During use thereof, generally, a predetermined number of the electrolyte electrode assemblies and the separators are stacked together to form a fuel cell stack.

While SOFCs have high power generation efficiency and can utilize various types of fuels, a reformer is required in the case that raw fuels primarily composed of hydrocarbons are used.

In Japanese Laid-Open Patent Publication No. 2017-027766, a fuel cell system is disclosed in which a reformer is provided on an exterior side of a fuel cell stack, and a fuel gas and an oxygen-containing gas are reformed by a partial oxidation reaction in the reformer to thereby obtain a fuel gas, and the obtained fuel gas is supplied to the fuel cell stack.

### SUMMARY OF THE INVENTION

However, in the fuel cell system disclosed in Japanese Laid-Open Patent Publication No. 2017-027766, there is a problem in that the distances between the reformer and the electrolyte electrode assemblies that constitute respective layers of the fuel cell stack are not equivalent, and the amount of fuel gas supplied to each of the electrolyte electrode assemblies is not uniform.

The present invention has the object of providing a fuel cell module as well as a method of operating such a fuel cell module, which with a compact and simple configuration, is capable of achieving uniformity in the fuel gas to the fuel cells that make up a fuel cell stack.

A first aspect of the present invention is characterized by a fuel cell module, comprising a flat plate laminated type fuel cell stack in which a plurality of flat plate-shaped fuel cells are stacked, each of the fuel cells including an anode to which a fuel gas is supplied via a fuel gas flow field, and a cathode to which an oxygen-containing gas is supplied via an oxygen-containing gas flow field, and a reformer configured to reform a raw fuel primarily containing hydrocarbon, and to produce the fuel gas that is supplied to the fuel cell stack, wherein a fuel gas inlet passage which penetrates in a thickness direction through the plurality of fuel cells and is in communication with the fuel gas flow fields is formed in the fuel cell stack, and a reforming catalyst that constitutes the reformer is installed in the fuel gas inlet passage.

Another aspect of the present invention is characterized by a method of operating a fuel cell module, the fuel cell module comprising a flat plate laminated type fuel cell stack in which a plurality of flat plate-shaped fuel cells are stacked, each of the fuel cells including an anode to which a fuel gas is supplied via a fuel gas flow field, and a cathode to which an oxygen-containing gas is supplied via an oxygen-containing gas flow field, and a reformer configured to reform a raw fuel primarily containing hydrocarbon, and to produce the fuel gas that is supplied to the fuel cell stack, wherein a fuel gas inlet passage which penetrates in a thickness direction through the plurality of fuel cells and is in communication with the fuel gas flow fields is formed in the fuel cell stack, and a reforming catalyst that constitutes the reformer is installed in the fuel gas inlet passage, the method comprising the steps of, at a time that the fuel cell module is initiated, supplying the mixed gas containing the raw fuel and the oxygen-containing gas to the reformer, and after power generation by the fuel cell module has been initiated, supplying the fuel gas to the reformer.

According to the fuel cell module of the aforementioned aspects, since the reforming catalyst (reformer) is provided at a location which is equidistant with respect to each of the fuel cells constituting the fuel cell stack, the fuel gas can be made uniform for each of the fuel cells. Further, since the reforming catalyst (reformer) is incorporated in the fuel gas inlet passage of the fuel cell stack, the fuel cell module can be made compact.

The above and other objects, features, and advantages of the present invention will become more apparent from the following description when taken in conjunction with the accompanying drawings, in which preferred embodiments of the present invention are shown by way of illustrative example.

### BRIEF DESCRIPTION OF THE DRAWINGS

FIG. 1 is a block diagram of a fuel cell module according to a first embodiment of the present invention;
FIG. 2 is a cross-sectional view of a fuel cell stack of the fuel cell module shown in FIG. 1;
FIG. 3 is a cross-sectional view taken along line III-III of a fuel cell that constitutes part of the fuel cell stack shown in FIG. 2;
FIG. 4 is a block diagram of a fuel cell module according to a second embodiment of the present invention; and
FIG. 5 is a flowchart showing operations at a time that the fuel cell module according to the second embodiment is initiated.

### DESCRIPTION OF THE PREFERRED EMBODIMENTS

Preferred embodiments of the present invention will be described in detail below with reference to the accompanying drawings.

### (First Embodiment)

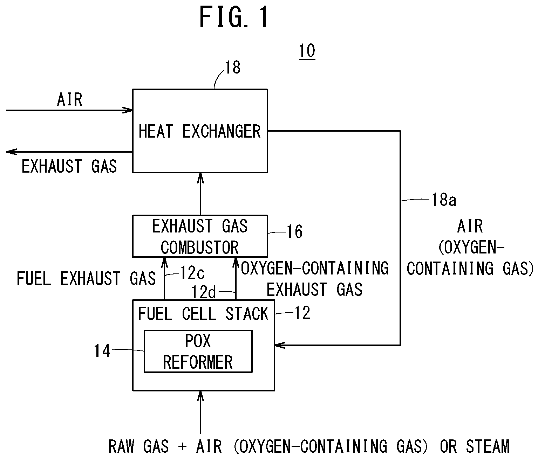

The fuel cell module 10 according to the present embodiment shown in FIG. 1 can be used not only for stationary use, but also for various applications such as vehicle-mounted uses and for use as a portable generator.

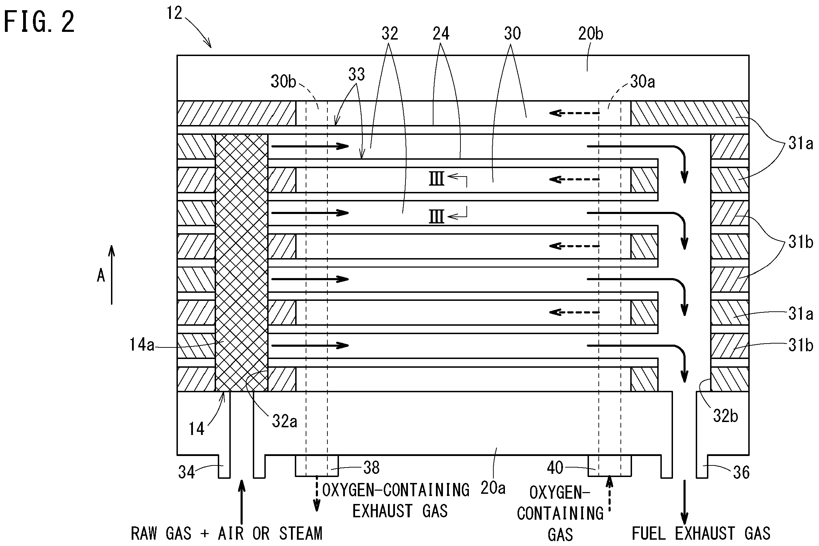

The fuel cell module 10 is equipped with a flat plate laminated type fuel cell stack 12, a reformer 14, an exhaust gas combustor 16, and a heat exchanger 18. As shown in FIG. 2, the fuel cell stack 12 is equipped with solid oxide fuel cells 33 that generate electrical energy by electrochemical reactions taking place between a fuel gas (a gas obtained by mixing primarily hydrogen and carbon monoxide), and an oxygen-containing gas (air). A plurality of the fuel cells 33 are stacked in a thickness direction (the direction of the arrow A), together with end plates 20a and 20b being disposed on both ends in the fuel cell stacking direction (hereinafter simply referred to as a stacking direction).

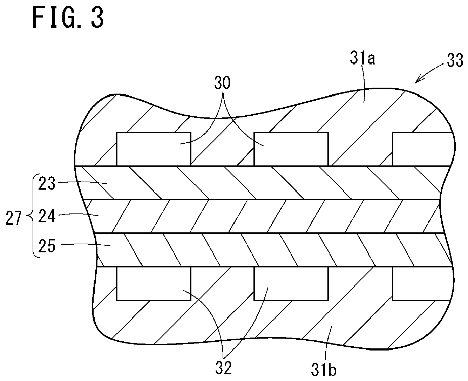

As shown in FIG. 3, each of the fuel cells 33 comprises an electrolyte electrode assembly (MEA) 27. The electrolyte electrode assembly 27 includes a cathode 23, an anode 25, and an electrolyte 24 interposed between the cathode 23 and the anode 25. The electrolyte 24 is constituted by an oxide ion conductor made of stabilized zirconia, for example.

A cathode side separator 31a and an anode side separator 31b are disposed on both sides of the electrolyte electrode assembly 27. An oxygen-containing gas flow field 30 for supplying the oxygen-containing gas to the cathode 23 is formed on the cathode side separator 31a. A fuel gas flow field 32 for supplying the fuel gas to the anode 25 is formed on the anode side separator 31b. Various types of SOFCs which have been used conventionally are capable of being used as the fuel cells 33.

The operating temperature of the fuel cells 33 is a high temperature on the order of several hundred degrees centigrade °C, and the fuel gas, which is obtained by reforming the raw fuel and contains hydrogen and carbon monoxide, is supplied to the anode 25.

As shown in FIG. 2, in the fuel cell stack 12, there are provided an oxygen-containing gas inlet passage 30a communicating with an inlet side of each of the oxygen-containing gas flow fields 30, and an oxygen-containing gas outlet passage 30b communicating with an outlet side of the respective oxygen-containing gas flow fields 30. The oxygen-containing gas inlet passage 30a and the oxygen-containing gas outlet passage 30b extend in the stacking direction (in the direction of the arrow A) inside the fuel cell stack 12.

Further, in the fuel cell stack 12, there are provided a fuel gas inlet passage 32a communicating with an inlet side of each of the fuel gas flow fields 32, and a fuel gas outlet passage 32b communicating with an outlet side of the respective fuel gas flow fields 32. The fuel gas inlet passage 32a and the fuel gas outlet passage 32b extend in the stacking direction (in the direction of the arrow A) inside the fuel cell stack 12.

A gas containing a hydrocarbon such as methane, ethane, propane, butane, or the like is supplied as a raw fuel to the fuel cell module 10. Such a raw fuel is reformed by the reformer 14, and thereby converted into a fuel gas that primarily contains hydrogen and carbon monoxide. More specifically, the reformer 14 reforms a raw fuel chiefly containing hydrocarbon, and produces the fuel gas that is supplied to the fuel cell stack 12. The reformer 14, for example, can be either a partial oxidation reformer (POX reformer) or a steam reformer.

The reformer 14 in the present embodiment is constituted by a reforming catalyst 14a provided in the fuel gas inlet passage 32a of the fuel cell stack 12. More specifically, the reformer 14 is incorporated into the interior of the fuel gas inlet passage 32a. The reformer 14 is a cylindrical body having a mesh or a large number of holes provided therein, and which is filled internally with the reforming catalyst 14a. The reformer 14 is disposed over the entire area inside the fuel gas inlet passage 32a facing toward the fuel gas flow fields 32. At least one or both of the oxygen-containing gas and water vapor are supplied together with the raw fuel to such a reformer 14. By causing a reaction between the hydrocarbon within the raw fuel and oxygen and water, the reformer 14 converts the raw fuel into a fuel gas that primarily contains hydrogen and carbon monoxide. Such a reformer 14 is operated at an operating temperature of 500°C to 1000°C.

In the case that the reformer 14 is configured in a manner so as to perform partial oxidation reforming, the reforming catalyst 14a can utilize, for example, a metal catalyst containing at least one of Pt (platinum), Rh (rhodium), and Pd (palladium). In this case, the oxygen-containing gas is supplied to the reformer 14 together with the raw fuel. For example, when the ratio of oxygen to carbon (O₂/C) within the mixed gas is set to O₂/C = 0.5, a partial oxidation reaction in the form of 2CH₄ + O₂ → 4H₂ + 2CO is generated. The partial oxidation reaction is an exothermic reaction, and from the reformer 14, a fuel gas of a high temperature (for example, 500°C to 1000°C) is generated.

Further, the reformer 14 may be configured in a manner so as to perform steam reforming. In this case, a metal catalyst containing, for example, at least one of Ru (ruthenium), Ni (nickel), Pt (platinum), Rh (rhodium), Pd (palladium), Ir (iridium), and Fe (iron) can be used as the reforming catalyst 14a. In this case, a mixed gas of the raw fuel and steam is supplied to the reformer 14. In addition, in the interior of the reformer 14, for example, a steam reforming reaction in the form of CH₄ + H₂O → 3H₂ + CO is generated. The steam reforming reaction is an endothermic reaction, and heat required for the reaction can be supplied by the reactive heat of the fuel cells 33, or by combustion heat from the exhaust gas combustor 16.

The fuel cell stack 12 is fixed between the end plates 20a and 20b by non-illustrated set screws, and a predetermined clamping load is applied in the stacking direction. A fuel gas introduction port 34 in communication with the fuel gas inlet passage 32a, a fuel gas discharge port 36 in communication with the fuel gas outlet passage 32b, an oxygen-containing gas introduction port 40 in communication with the oxygen-containing gas inlet passage 30a, and an oxygen-containing gas discharge port 38 in communication with the oxygen-containing gas outlet passage 30b are formed in the end plate 20b.

The fuel gas discharge port 36 communicates with the exhaust gas combustor 16 (see FIG. 1) via a fuel exhaust gas flow passage 12c. The oxygen-containing gas discharge port 38 communicates with the exhaust gas combustor 16 via an oxygen-containing exhaust gas flow passage 12d. Further, the heat exchanger 18 (see FIG. 1) is connected to the oxygen-containing gas introduction port 40 via an oxygen-containing gas flow passage 18a.

As shown in FIG. 1, the exhaust gas combustor 16 causes combustion to occur between the fuel exhaust gas, which is the fuel gas that is discharged from the fuel cell stack 12, and the oxygen-containing exhaust gas, which is the oxygen-containing gas that is discharged from the fuel cell stack 12, and thereby generates a high temperature combustion gas. The combustion gas generated by the exhaust gas combustor 16 is supplied to the heat exchanger 18.

The heat exchanger 18 raises the temperature of the oxygen-containing gas (air) by way of heat exchange with the combustion gas. The heat exchanger 18 and the fuel cell stack 12 are connected via the oxygen-containing gas flow passage 18a. The oxygen-containing gas that is raised in temperature by the heat exchanger 18 is supplied to the oxygen-containing gas inlet passage 30a (see FIG. 2) of the fuel cell stack 12 through the oxygen-containing gas flow passage 18a.

Operations of the fuel cell module 10 which is configured in the foregoing manner will be described below.

In the fuel cell module 10, as shown in FIG. 1, the raw fuel is supplied together with the oxygen-containing gas or steam to the reformer 14 from the fuel gas introduction port 34 of the end plate 20a. Inside the reformer 14 of the fuel gas inlet passage 32a, the raw gas is reformed accompanying introduction of the mixed gas composed of the raw fuel and the oxygen-containing gas or steam.

As shown in FIG. 2, the fuel gas that is reformed by the reformer 14 flows through the fuel gas flow fields 32 of the fuel cell stack 12. An approximately equal amount of the fuel gas is supplied to the electrolyte electrode assemblies 27 that constitute the respective layers of the fuel cell stack 12. The fuel gas (fuel exhaust gas) that has flowed through the fuel gas flow fields 32 passes through the fuel gas outlet passage 32b, and is discharged from the fuel gas discharge port 36. The fuel exhaust gas is introduced into the exhaust gas combustor 16 that communicates with the fuel exhaust gas flow passage 12c.

As shown in FIG. 1, the oxygen-containing gas passes through the heat exchanger 18 and the oxygen-containing gas flow passage 18a, and is introduced into the fuel cell stack 12 from the oxygen-containing gas inlet passage 30a (see FIG. 2). In the heat exchanger 18, the supplied air (oxygen-containing gas) is raised in temperature by the combustion gas. The oxygen-containing gas that is raised in temperature by the heat exchanger 18 passes through the oxygen-containing gas flow passage 18a, and is introduced to the oxygen-containing gas inlet passage 30a from the oxygen-containing gas introduction port 40 of the fuel cell stack 12. The oxygen-containing gas flows through the oxygen-containing gas flow fields 30.

Upon performing the above actions, the air flows through the oxygen-containing gas flow fields 30, whereas the fuel gas flows through the fuel gas flow fields 32. Consequently, a chemical reaction is generated at the cathode 23 and the anode 25 of each of the fuel cells 33, and generation of electrical power is performed. The oxygen-containing gas (oxygen-containing exhaust gas) that has flowed through the oxygen-containing gas flow fields 30 passes through the oxygen-containing gas outlet passage 30b, and is discharged from the oxygen-containing gas discharge port 38. The oxygen-containing exhaust gas passes through the oxygen-containing exhaust gas flow passage 12d, and is introduced into the exhaust gas combustor 16.

The fuel exhaust gas and the oxygen-containing exhaust gas that are introduced into the exhaust gas combustor 16 are subjected to combustion inside the exhaust gas combustor 16, and the combustion gas is supplied to the heat exchanger 18. At this time, by way of radiation or heat conduction, the combustion heat generated by the exhaust gas combustor 16 is used for heating and maintaining the operating temperature of the fuel cell stack 12. Thereafter, after having been used to raise the temperature of the oxygen-containing gas in the heat exchanger 18, the combustion gas is exhausted from the fuel cell module 10.

The fuel cell module 10 described above realizes the following advantageous effects.

In the fuel cell module 10, the reformer 14 is constituted by a partial oxidation reforming catalyst provided in the fuel gas inlet passage 32a of the fuel cell stack 12. Consequently, there is no need for the reformer 14 to be disposed externally of the fuel cell stack 12, and the fuel cell module 10 can be made small in scale.

Further, in a conventional fuel cell module, although the fuel gas is supplied through the fuel gas inlet passage, a greater amount of the fuel gas is supplied by the fuel cell in the vicinity of the end plate in which the fuel gas inlet is formed, whereas the amount of fuel gas supplied to the fuel cell on a side remote from the end plate becomes smaller. As a result, fuel cells to which an excessive amount of the fuel gas is supplied to some fuel cells, whereby the power generation efficiency is decreased. In contrast thereto, according to the fuel cell module 10 of the present embodiment, since the reformer 14 is disposed equidistantly with respect to all of the fuel cells 33, the reformed fuel gas can be evenly distributed to the fuel cells 33 under equivalent conditions. Consequently, the efficiency at which the fuel gas is utilized is increased.

Furthermore, in the fuel cell module 10, there are provided the exhaust gas combustor 16 that induces combustion of the fuel exhaust gas and the oxygen-containing exhaust gas discharged from the fuel cells 33, and the heat exchanger 18 that raises the temperature of the oxygen-containing gas using the combustion gas produced by the exhaust gas combustor 16. According to the fuel cell module 10, since the fuel cells 33 can be heated by radiation or by conduction of heat from the exhaust gas combustor 16, together with the fuel cells 33 being heated by the oxygen-containing gas that is heated by the heat exchanger 18, the ability to initiate operation of the fuel cell module 10 is superior.

### (Second Embodiment)

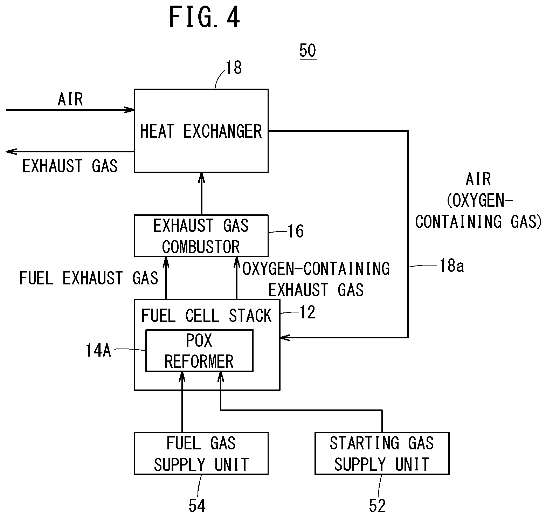

As shown in FIG. 4, in a fuel cell module 50 according to a second embodiment, as the reforming catalyst 14a of the reformer 14A, a reforming catalyst for partial oxidation reforming is utilized. Further, the fuel cell module 50 differs from the fuel cell module 10 shown in FIG. 1, in that it is equipped with a starting gas supply unit 52 and a fuel gas supply unit 54. The other constituent features thereof are the same as those of the fuel cell module 10. The same constituent features as those of the fuel cell module 10 are denoted using the same reference numerals, and detailed description of such features is omitted.

The starting gas supply unit 52 is connected to the reformer 14A, and is configured in a manner so as to supply the mixed gas composed of the raw fuel and the oxygen-containing gas to the reformer 14A as a starting gas at the time that the fuel cell module 10 is initiated.

The fuel gas supply unit 54, for example, is an external reformer or the like, and during steady operation of the fuel cell module 50, supplies the fuel gas to the fuel gas inlet passage 32a in which the reformer 14A is disposed. The aforementioned starting gas supply unit 52 and the fuel gas supply unit 54 are configured in a manner so as to be operated under the control of a non-illustrated control unit.

Hereinafter, operations at the time that the fuel cell module 50 is initiated according to the present embodiment will be described.

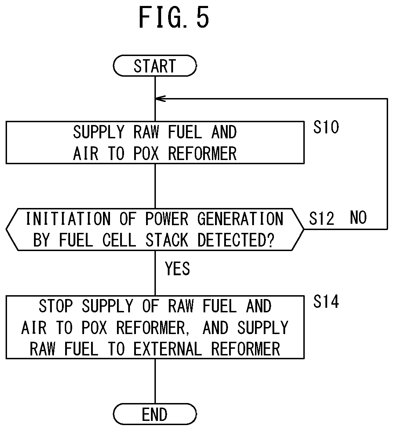

According to the present embodiment, at the time that the fuel cell module 50 is initiated, the mixed gas of the raw fuel and the oxygen-containing gas (air) is supplied to the reformer 14A through the starting gas supply unit 52 (step S10), as shown in FIG. 5. Accompanying introduction of the raw fuel and the oxygen-containing gas, the mixed gas inside the reformer 14A is ignited, and the raw fuel is converted into the fuel gas by the partial oxidation reaction.

The high temperature fuel gas that is generated by the reformer 14A passes through the fuel gas flow fields 32 of the fuel cells 33 and heats the fuel cells 33. Further, the oxygen-containing gas is supplied to the oxygen-containing gas flow fields 30.

Next, the fuel cell module 50 detects whether or not power generation by the fuel cell stack 12 has been initiated (step S12). More specifically, it is detected whether or not the temperature of the fuel cell stack 12 has risen to a predetermined value, or alternatively, whether a predetermined amount of power is being generated from the anodes and the cathodes. In the case that initiation of power generation by the fuel cell stack 12 is not detected (step S12: NO), the process returns to step S10, and the starting gas supply unit 52 continues to supply the raw fuel and the oxygen-containing gas to the reformer 14A.

On the other hand, in the case that initiation of power generation by the fuel cell stack 12 is detected (step S12: YES), the starting gas supply unit 52 stops the supply of the oxygen-containing gas to the reformer 14A, and the fuel gas supply unit 54 supplies to the reformer 14A the fuel gas from the fuel gas introduction port 34 (step S14). Consequently, the process of initiating the fuel cell stack 12 is brought to an end. Thereafter, in accordance with the fuel gas supplied from the fuel gas supply unit 54, the fuel cell module 50 transitions to steady operation.

The fuel cell module 50 described above realizes the following advantageous effects.

The reformer 14A utilizes the reforming catalyst for partial oxidation reforming. Furthermore, at a time that the fuel cell module 50 is initiated, the mixed gas of the raw fuel and the oxygen-containing gas (air) is supplied to the reformer 14A through the starting gas supply unit 52. Due to this feature, a high temperature fuel gas can be generated by an exothermic reaction due to the partial oxidation reforming carried out in the reformer 14A, and the fuel cells 33 can be heated at the time of being initiated. As a result, there is no need to provide a combustor for heating on an exterior side of the fuel cell stack 12, and the fuel cell module 50 can be made small in scale.

A fuel cell module (10) is equipped with a fuel cell stack (12) in which a plurality of flat plate-shaped fuel cells (33) are stacked, each of the fuel cells including an anode (25) to which a fuel gas is supplied via a fuel gas flow field (32), and a cathode (23) to which an oxygen-containing gas is supplied via an oxygen-containing gas flow field (30). Further, in the fuel cell stack (12), a reforming catalyst (14a) (reformer (14)), which reforms a raw fuel primarily containing hydrocarbon and produces the fuel gas, is provided in a fuel gas inlet passage (32a), which penetrates in a thickness direction through the plurality of fuel cells (33) and is in communication with the fuel gas flow fields (32).

## Claims

1. A fuel cell module (10) comprising:
a flat plate laminated type fuel cell stack (12) in which a plurality of flat plate-shaped fuel cells (33) are stacked, each of the fuel cells including an anode (25) to which a fuel gas is supplied via a fuel gas flow field (32), and a cathode (23) to which an oxygen-containing gas is supplied via an oxygen-containing gas flow field (30); and
a reformer (14) configured to reform a raw fuel primarily containing hydrocarbon, and to produce the fuel gas that is supplied to the fuel cell stack;
wherein a fuel gas inlet passage (32a) which penetrates in a thickness direction through the plurality of fuel cells and is in communication with the fuel gas flow fields is formed in the fuel cell stack, and a reforming catalyst (14a) that constitutes the reformer is installed in the fuel gas inlet passage.

2. The fuel cell module according to claim 1, wherein the reforming catalyst is a partial oxidation reforming catalyst, and the reformer, by a partial oxidation reaction, converts the raw fuel into a fuel gas containing hydrogen and carbon monoxide.

3. The fuel cell module according to claim 1, wherein the reforming catalyst is a steam reforming catalyst, and the reformer, by a steam reforming reaction, converts the raw fuel into a fuel gas containing hydrogen and carbon monoxide.

4. The fuel cell module according to claim 1, further comprising:
an exhaust gas combustor (16) configured to induce combustion of a fuel exhaust gas and an oxygen-containing exhaust gas discharged from the fuel cell; and
a heat exchanger (18) configured to raise a temperature of the oxygen-containing gas using a combustion gas produced by the exhaust gas combustor.

5. The fuel cell module (50) according to claim 3, further comprising:
a starting gas supply unit (52) configured to supply a mixed gas containing the raw fuel and the oxygen-containing gas to the reformer; and
a fuel gas supply unit (54) configured to supply the fuel gas to the reformer;
wherein, at a time that the fuel cell module is initiated, the mixed gas is supplied to the reformer from the starting gas supply unit, and after power generation by the fuel cell module has been initiated, the fuel gas is supplied to the reformer from the fuel gas supply unit.

6. A method of operating a fuel cell module (10), the fuel cell module comprising a flat plate laminated type fuel cell stack (12) in which a plurality of flat plate-shaped fuel cells (33) are stacked, each of the fuel cells including an anode (25) to which a fuel gas is supplied via a fuel gas flow field (32), and a cathode (23) to which an oxygen-containing gas is supplied via an oxygen-containing gas flow field (30), and a reformer (14) configured to reform a raw fuel primarily containing hydrocarbon, and to produce the fuel gas that is supplied to the fuel cell stack, wherein a fuel gas inlet passage (32a) which penetrates in a thickness direction through the plurality of fuel cells and is in communication with the fuel gas flow fields is formed in the fuel cell stack, and a reforming catalyst (14a) that constitutes the reformer is installed in the fuel gas inlet passage, the method comprising the steps of:
at a time that the fuel cell module is initiated, supplying the mixed gas containing the raw fuel and the oxygen-containing gas to the reformer; and
after power generation by the fuel cell module has been initiated, supplying the fuel gas to the reformer.
